# EUROPEAN PATENT APPLICATION

(11) **EP 4 722 032 A1**
(43) Date of publication of application: **08.04.2026**
(21) Application number: 24815048.4
(22) Date of filing: 24.04.2024
(51) Int. Cl.: B60N 2/07

(54) **SEAT SLIDE STRUCTURE**

(30) Priority: 02.06.2023 JP 2023091527
(71) Applicant: THK CO., LTD., Minato-ku Tokyo 108-8506 (JP)
(72) Inventor: NISHIDE Tetsuhiro, Tokyo 108-8506 (JP); MINAMI Toshiro, Tokyo 108-8506 (JP); KURIBAYASHI Hiroomi, Tokyo 108-8506 (JP); AOYAGI Hitoshi, Tokyo 108-8506 (JP)
(74) Representative: Prinz & Partner mbB
(86) International application number: PCT/JP2024/015980
(87) International publication number: WO 2024/247563

(57) **Abstract**

There is provided a seat sliding structure capable of increasing the slide amount of a seat, and securing legroom in front of and behind the seat without exposing a seat sliding mechanism such as a rail. A seat sliding structure in which a seat is attached to a floor surface so as to be slidable in a front-rear direction, the seat sliding structure including a first linear guiding device that guides the seat to be slidable in the front-rear direction, in which the first linear guiding device includes a first rail and a first block, and the first block is fixed to the floor surface.

## Description

### TECHNICAL FIELD

The present invention relates to a seat sliding structure.

### BACKGROUND ART

Conventionally, as seat sliding structures used for automobiles and the like, a structure has been known in which a slide rail mechanism is interposed between a seat and a vehicle-body floor surface, and the seat is slidable in a vehicle front-rear direction. In addition, a seat sliding structure is known that increases the slide amount of a seat to increase convenience. Various structures are known for sliding structures as described above. For example, as described in Patent Literature 1, a vehicle seat device is known in which a seat back is coupled to a seat cushion so that the seat back can be raised and bent in a seat front-rear direction, and the seat cushion is attached to a vehicle body floor surface side via a slide rail mechanism that is configured with a first slide rail mechanism and a second slide rail mechanism, the first slide rail mechanism including a first upper rail and a first lower rail slidable with respect to each other, the first upper rail being fixed to the seat cushion, the second slide rail mechanism including a second upper rail and a second lower rail, the second lower rail being fixed to a vehicle body floor surface side, and that is configured such that the first lower rail of the first slide rail mechanism and the second upper rail of the second slide rail mechanism are integrally combined, and in which the vehicle seat device includes an unlock mechanism that unlocks a locking mechanism on the second slide rail mechanism side in response to forward bending displacement of the seat back when the seat back is bent forward at a sliding foremost position of the first slide rail mechanism.

According to such a vehicle seat device, by configuring the slide rail mechanism with two mechanisms, i.e., the first slide rail mechanism and the second slide rail mechanism, and selectively using these two slide rail mechanisms according to need, the slide amount can be increased compared to a seat sliding structure configured with one slide rail mechanism.

### CITATION LIST

### PATENT LITERATURE

Patent Literature 1: Japanese Patent Laid-Open No. 2003-312324

### SUMMARY Of INVENTION

### PROBLEMS TO BE SOLVED BY THE INVENTION

However, for example, when the conventional seat sliding structure is adopted for a front seat of an automobile, there has been a problem that even when the front seat is slid forward to increase the legroom of a rear seat, a rail, a mounting bracket, and the like fixed to a vehicle body floor surface are exposed, these become obstacles in the legroom of the rear seat, and the increased legroom cannot be effectively utilized.

The present invention has been made to solve the above-described problem, and has an object of providing a seat sliding structure capable of increasing the slide amount of a seat, and securing legroom in front of and behind the seat without exposing a sliding mechanism such as a rail.

### MEANS FOR SOLVING THE PROBLEMS

A seat sliding structure according to the present invention that solves the above-described problem is a seat sliding structure in which a seat is attached to a floor surface so as to be slidable in a front-rear direction, the seat sliding structure including a first linear guiding device that guides the seat to be slidable in the front-rear direction, in which the first linear guiding device includes a first rail and a first block, and the first block is fixed to the floor surface.

### EFFECTS Of THE INVENTION

With the seat sliding structure according to the present invention, it is possible to increase the slide amount of a seat, and to secure legroom in front of and behind the seat without exposing a sliding mechanism such as a rail. In addition, with the seat sliding structure according to the present invention, by arranging a seat sliding structure inside a seat cushion and a seat base cover, the internal space on a floor surface under the seat can be effectively utilized.

### BRIEF DESCRIPTION Of THE DRAWINGS

[FIG. 1] FIG. 1 is a side view of a seat sliding structure according to a first embodiment of the present invention.
[FIG. 2] FIG. 2 is a perspective view of the seat sliding structure according to the first embodiment of the present invention as seen from below.
[FIG. 3] FIG. 3 is an enlarged cross-sectional view of a part A in FIG. 2.
[FIG. 4] FIG. 4 is a perspective view of the seat sliding structure according to the first embodiment of the present invention as seen from above.
[FIG. 5] FIG. 5 is a perspective view of the seat sliding structure according to the first embodiment of the present invention as seen from below, illustrating a state where a first sliding mechanism is driven forward.
[FIG. 6] FIG. 6 is a perspective view of the seat sliding structure according to the first embodiment of the present invention as seen from above, illustrating a state where the first sliding mechanism and a second sliding mechanism are driven forward.
[FIG. 7] FIG. 7 is a reference diagram illustrating a moving range of a seat according to the first embodiment of the present invention, in which an upper portion illustrates a state where the seat is moved to a rearmost position, and a lower portion illustrates a state where the seat is moved to a foremost position.
[FIG. 8] FIG. 8 is a side view of a seat sliding structure according to a second embodiment of the present invention.
[FIG. 9] FIG. 9 is a perspective view of the seat sliding structure according to the second embodiment of the present invention as seen from above.
[FIG. 10] FIG. 10 is a perspective view of the seat sliding structure according to the second embodiment of the present invention as seen from below.
[FIG. 11] FIG. 11 is an enlarged cross-sectional view of a part B in FIG. 10.
[FIG. 12] FIG. 12 is a perspective view of the seat sliding structure according to the second embodiment of the present invention as seen from above, illustrating a state where a first sliding mechanism is driven forward.
[FIG. 13] FIG. 13 is a perspective view of the seat sliding structure according to the second embodiment of the present invention as seen from above, illustrating a state where the first sliding mechanism and a second sliding mechanism are driven forward.
[FIG. 14] FIG. 14 is a reference diagram illustrating a moving range of a seat according to the second embodiment of the present invention, in which an upper portion illustrates a state where the seat is moved to a rearmost position, and a lower portion illustrates a state where the seat is moved to a foremost position.

### MODE FOR CARRYING OUT THE INVENTION

Hereinafter, embodiments of a seat sliding structure according to the present invention will be described with reference to the drawings. It should be noted that the following embodiments do not limit the invention according to each claim, and not all the combinations of features described in the embodiments are necessarily essential to the solutions of the invention.

### [First Embodiment]

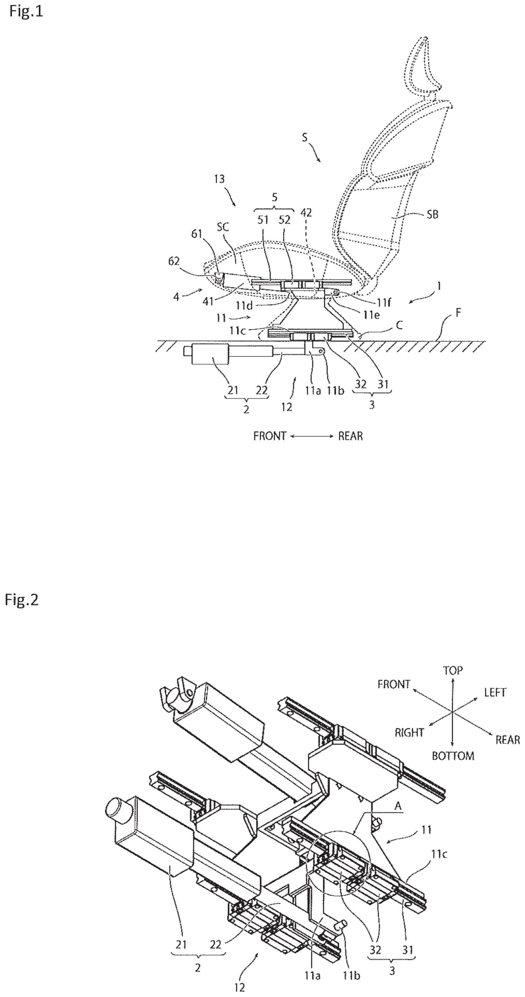

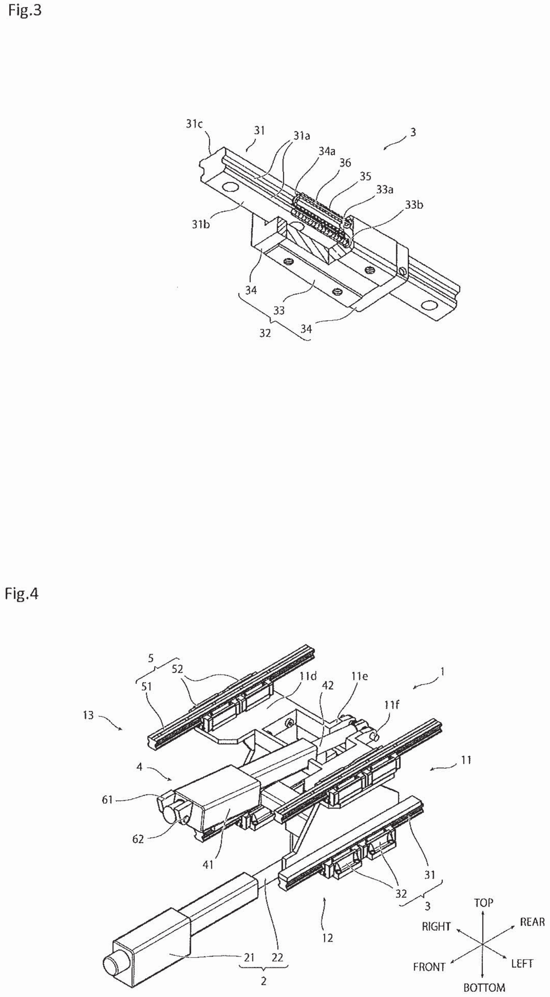

FIG. 1 is a side view of a seat sliding structure according to a first embodiment of the present invention, FIG. 2 is a perspective view of the seat sliding structure according to the first embodiment of the present invention as seen from below, FIG. 3 is an enlarged cross-sectional view of a part A in FIG. 2, and FIG. 4 is a perspective view of the seat sliding structure according to the first embodiment of the present invention as seen from above. In addition, it is assumed that, in the present description, a front-rear direction is defined as the direction of arrows illustrated in FIGS. 1, 2, 4, 5, and 6, and a left-right direction is defined as the direction of arrows illustrated in FIGS. 2, 4, 5, and 6.

As illustrated in FIG. 1, a seat sliding structure 1 according to the first embodiment is arranged on a floor surface F and inside a seat S, and attaches the seat S to the floor surface Fa so as to be slidable in the front-rear direction. In the present embodiment, the seat S includes a seat cushion SC and a seat back SB, and is used as a front seat of an automobile as an example.

The seat sliding structure 1 includes a seat base 11 arranged between the floor surface F and the seat cushion SC as illustrated in FIG. 1. In addition, the seat sliding structure 1 includes a first sliding mechanism 12 that attaches the seat base 11 to the floor surface F so as to be slidable in the front-rear direction, and a second sliding mechanism 13 that attaches the seat cushion SC to the seat base 11 so as to be slidable in the front-rear direction.

As illustrated in FIG. 1, the seat base 11 extends below the floor surface F, and includes a first bracket part 11a to which a first slide rod 22, which will be described later, is rotatably attached. The first bracket part 11a includes a hinge pin 11b having the depth direction (hereinafter referred to as the left-right direction) as viewed in FIG. 1 as the axis direction.

In addition, the seat base 11 includes a rail mounting portion 11c to which a first rail 31, which will be described later, is fixed, and a block mounting portion 11d to which second blocks 52, which will be described later, are fixed. The rail mounting portion 11c is arranged in a lower portion of the seat base 11, and the block mounting portion 11d is arranged to be in an upper portion of the seat base 11 and to be inside the seat cushion SC.

In addition, the seat base 11 includes a second bracket part 11e to which a second slide rod 42, which will be described later, is rotatably attached. The second bracket part 11e is arranged to be located inside the seat cushion SC, and includes a hinge pin 11f having the left-right direction as the axis direction.

The first sliding mechanism 12 includes a first actuator 2 that drives the seat base 11 in the front-rear direction with respect to the floor surface F, and a pair of first linear guiding devices 3 that guide the movement of the seat base 11 in the front-rear direction.

The first actuator 2 includes a first slide rod 22 that is a shaft portion, and a first actuator body 21 that linearly moves the first slide rod 22 in the axis direction. A known direct-acting actuator can be used for the first actuator 2, and as an example, the first actuator 2 may be configured by combining a motor included inside the first actuator body 21 and a ball screw included in the first slide rod 22. The first actuator 2 is supplied with power from a power storage device that is not illustrated, and can extend and retract the first slide rod 22 in the axis direction with respect to the first actuator body 21 in response to an operation on a switch or the like by a passenger.

As illustrated in FIG. 1, the first actuator 2 is arranged inside the floor surface F, and is arranged so that the axis direction of the first slide rod 22 is substantially along the front-rear direction. In addition, a front-side end portion of the first actuator body 21 may be attached via a vehicle-side bracket that is fixed inside the floor surface F and that is not illustrated. In this case, it is preferable that the vehicle-side bracket includes a hinge pin having the left-right direction as the axis direction, and the first actuator body 21 is attached to be rotatable around the hinge pin.

A rear-side end portion of the first slide rod 22 is attached to the seat base 11 via the first bracket part 11a as illustrated in FIG. 1. In addition, the first slide rod 22 is attached to be rotatable around the hinge pin 11b.

According to the attaching structure of the first actuator body 21 and the vehicle-side bracket, and the attaching structure of the first slide rod 22 and the first bracket part 11a as described above, even in a case where the sliding direction of the seat base 11 with respect to the floor surface F does not match the extension and retraction direction of the first slide rod 22, the seat base 11 can be smoothly moved without interference between each part.

As illustrated in FIG. 2, the first linear guiding device 3 includes the first rail 31 attached to the rail mounting portion 11c of the seat base 11, and first blocks 32 attached to the floor surface F. The first rail 31 and the first blocks 32 are configured to be slidable along the longitudinal direction of the first rail 31.

The first linear guiding device 3 is attached to both the left and right sides of the seat base 11, and the first rails 31 located on the left and right are arranged so that their longitudinal directions are along the front-rear direction, and are parallel to each other.

As illustrated in FIG. 3, the first rail 31 is a long member having a cross-sectional shape formed into a substantially rectangular shape, and rolling element rolling surfaces 31a formed on both the left and right sides. Two rolling element rolling surfaces 31a are formed on each of both the left and right side surfaces of the substantially rectangular cross-sectional shape of the first rail 31, and a total of four rolling element rolling surfaces 31a are symmetrically formed.

A plurality of bolt holes are drilled in the first rail 31 from a surface 31b toward a surface 31c. In the present embodiment, the first linear guiding device 3 is fastened to the rail mounting portion 11c of the seat base 11 by inserting bolts to these plurality of bolt holes formed in the first rail 31.

As illustrated in FIG. 3, the first block 32 has a substantially U-shaped cross-section that spans the surface 31b and both the left and right side surfaces of the first rail 31, and includes a block portion body 33, and a pair of side lids 34 attached to both end surfaces that are in a reciprocating direction of this block portion body 33.

In addition, the length of the first block 32 in the longitudinal direction is set to be sufficiently short with respect to the first rail 31.

The block portion body 33 and the side lids 34 include a center portion that faces the surface 31b of the first rail 31, and a pair of leg portions that face both the left and right side surfaces of the first rail 31. For example, a total of four load rolling element rolling surfaces 33a extending in the longitudinal direction of the first rail 31 are formed in the block portion body 33, so as to face the rolling element rolling surfaces 31a of the first rail 31.

In addition, a total of four rolling element return passages 33b extending parallel to the load rolling element rolling surfaces 33a are formed in the block portion body 33.

In addition, a U-shaped turning path 34a connecting one end of the load rolling element rolling surface 33a to one end of the rolling element return passage 33b is formed in the side lid 34.

In this manner, in the first block 32, an infinite circulation path consisting of a load rolling element rolling path that consists of the rolling element rolling surfaces 31a and the load rolling element rolling surfaces 33a, the pair of turning paths 34a, and the rolling element return passages 33b is formed.

In the first linear guiding device 3 according to the present embodiment, since a rolling element 35 is interposed between the rolling element rolling surfaces 31a and the load rolling element rolling surfaces 33a, when the first block 32 and the first rail 31 are moved along the longitudinal direction of the first rail 31, it is possible to cause the rolling element 35 to perform a rolling motion. The rolling element 35 that has rolled to one end of the load rolling element rolling path is led to one of the turning paths 34a. The rolling element 35 that has changed its moving direction in the turning path 34a rolls in the rolling element return passage 33b to pass through the other one of the turning paths 34a, and is thereafter returned to the load rolling element rolling path again. The rolling element 35 rolls in this manner, thereby realizing infinite circulation.

In addition, balls formed into spherical shapes are preferably used as a plurality of rolling elements 35. Furthermore, the plurality of rolling elements 35 are held by a strip-shaped retainer 36 consisting of spacer portions that are arranged between adjacent rolling elements 35, and strip-shaped connecting belts that connects the spacer portions arranged along the longitudinal direction. Collisions between the rolling elements 35 can be prevented by the spacer portions arranged between the rolling elements 35 in this manner. In addition, since the rolling elements 35 are connected and held in series by the strip-shaped retainer 36, the rolling elements 35 can be caused to roll while being aligned.

It should be noted that in a cross section in a surface that intersects the longitudinal direction of the first rail 31, the rolling element rolling surface 31a and the load rolling element rolling surface 33a are formed into a circular arc shape formed with a single curvature radius larger than the curvature radius of the rolling element 35. Accordingly, since the rolling element 35 contacts the load rolling element rolling path consisting of the rolling element rolling surface 31a and the load rolling element rolling surface 33a at two points, the rolling element 35 does not exhibit abnormal increase in the rolling resistance, and operates well even in a state where a load is applied. In addition, the rolling element rolling surface 31a and the load rolling element rolling surface 33a are not limited to this, and may be formed into a so-called Gothic arch shape that consists of two arcs having a curvature radius slightly larger than the curvature radius of the rolling element 35.

It should be noted that in the present embodiment, although two first blocks 32 are attached to one first rail 31 as illustrated in FIG. 2, the number of first blocks 32 is not limited to this, and only one first block 32 may be attached to one first rail 31, or two or more first blocks 32 may be attached to one first rail 31. The quantity of the first blocks 32 may be appropriately set in accordance with an installing space, the load capacity of the first linear guiding device 3, and the like.

As illustrated in FIG. 1, the second sliding mechanism 13 includes a second actuator 4 that drives the seat cushion SC with respect to the seat base 11 in the front-rear direction, and a pair of second linear guiding devices 5 that guide movement of the seat cushion SC in the front-rear direction.

The second actuator 4 includes a second slide rod 42 that is a shaft portion, and a second actuator body 41 that linearly moves the second slide rod 42 in the axis direction. In the present embodiment, the second actuator body 41 can have the same configuration as the first actuator body 21, and the second slide rod 42 can have the same configuration as the first slide rod 22. In addition, similar to the first actuator 2, the second actuator 4 is supplied with power from the power storage device that is not illustrated, and can extend and retract the second slide rod 42 in the axis direction with respect to the second actuator body 41 in response to an operation on a switch or the like by the passenger.

As illustrated in FIG. 1, the second actuator 4 is arranged inside the seat cushion SC, and is arranged so that the axis direction of the second slide rod 42 is substantially the front-rear direction. In addition, a front-side end portion of the second actuator body 41 is attached via a bracket 61 fixed to the seat cushion SC. The bracket 61 includes a hinge pin 62 having the left-right direction as the axis direction, and the second actuator body 41 is attached to be rotatable around the hinge pin 62.

A rear-side end portion of the second slide rod 42 is attached to the seat base 11 via a second bracket part 11e as illustrated in FIG. 1. In addition, the second slide rod 42 is attached to be rotatable around the hinge pin 11f.

According to the attaching structure of the second actuator body 41 and the bracket 61, and the attaching structure of the second slide rod 42 and the second bracket part 11e as described above, even in a case where the sliding direction of the seat cushion SC with respect to the seat base 11 does not match the extension and retraction direction of the second slide rod 42, the seat cushion SC can be smoothly moved without interference between each part.

As illustrated in FIG. 4, the second linear guiding device 5 includes a second rail 51 attached to the seat cushion SC, and second blocks 52 attached to the block mounting portion 11d of the seat base 11. The second rail 51 and the second blocks 52 are configured to be slidable along the longitudinal direction of the second rail 51.

The second linear guiding device 5 is attached to both the left and right sides of the seat base 11, and the second rails 51 located on the left and right are arranged so that their longitudinal directions are along the front-rear direction, and are parallel to each other.

In the present embodiment, the second rail 51 can have the same configuration as the first rail 31, and the second block 52 can have the same configuration as the first block 32.

The overall length of the second rail 51 can be set to be long as long as the second rail 51 fits inside the seat cushion SC as illustrated in FIG. 1. In addition, the overall length of the second rail 51 may be set to be longer than the overall length of the first rail 31.

It should be noted that in the present embodiment, although two second blocks 52 are attached to one second rail 51 as illustrated in FIG. 4, the number of second blocks 52 is not limited to this, and only one second block 52 may be attached to one second rail 51, or two or more second blocks 52 may be attached to one second rail 51. The quantity of the second blocks 52 may be appropriately set in accordance with an installing space, the load capacity of the second linear guiding device 5, and the like.

In addition, a seat base cover C may be attached between the floor surface F and the seat cushion SC as illustrated in FIG. 1. By attaching the seat base cover C as described above, the structures of the seat base 11, the first linear guiding devices 3, and the like can be arranged inside the seat base cover C without being exposed. Therefore, an interior space with excellent aesthetic appeal can be created, and foreign matters can be prevented from entering the first linear guiding devices 3.

In addition, with the seat sliding structure according to the present embodiment, the seat base 11 and the seat base cover C arranged under the seat can be made to have a shape that is widened from the seat cushion SC toward the floor surface F in a cross section in the front-rear direction, the rigidity of the seat creates a sense of security, it is possible to realize a design that is compact but does not cause anxiety, and furthermore, the rear side under the front seat can have a shape that is easier for a rear-seat passenger to place his/her feet, and that is an ergonomic shape.

Next, an operation example of the seat sliding structure 1 according to the present embodiment will be described.

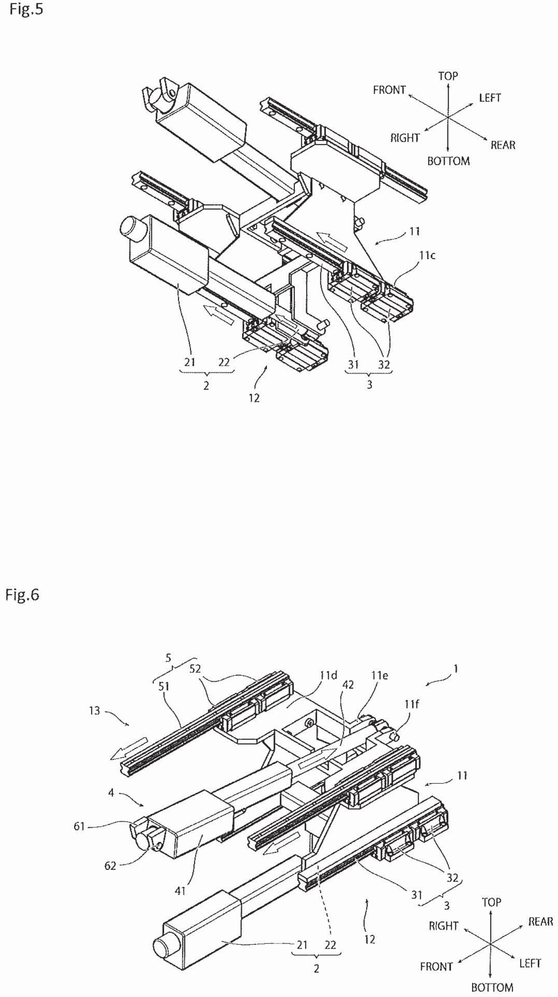

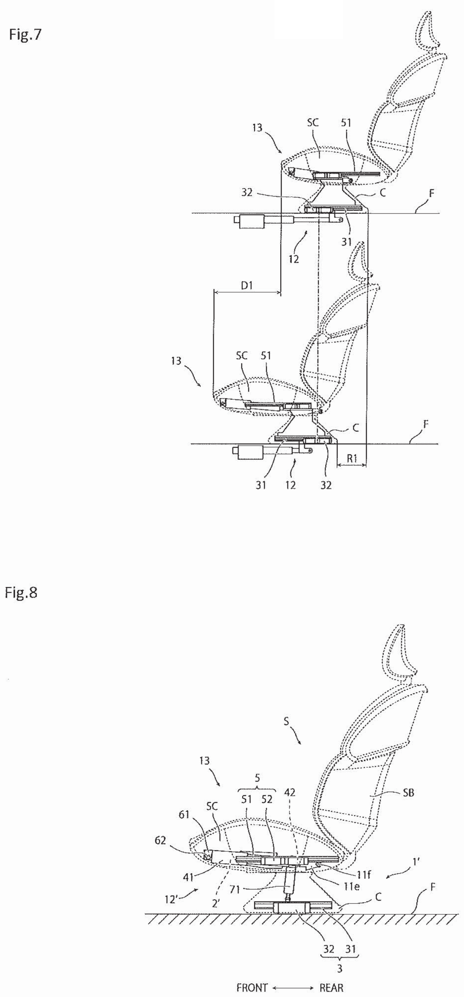

FIG. 5 is a perspective view of the seat sliding structure according to the first embodiment of the present invention as seen from below, illustrating a state where the first sliding mechanism is driven forward, FIG. 6 is a perspective view of the seat sliding structure according to the first embodiment of the present invention as seen from above, illustrating a state where the first sliding mechanism and the second sliding mechanism are driven forward, and FIG. 7 is a reference diagram illustrating a moving range of the seat according to the first embodiment of the present invention, in which an upper portion illustrates a state where the seat is moved to a rearmost position, and a lower portion illustrates a state where the seat is moved to a foremost position.

In the seat sliding structure 1 according to the present embodiment, each of the first sliding mechanism 12 and the second sliding mechanism 13 can be independently driven, and each of the movement of the seat base 11 with respect to the floor surface F in the front-rear direction and the movement of the seat cushion SC with respect to the seat base 11 in the front-rear direction can be performed.

First, the movement of the seat base 11 by the first sliding mechanism 12 will be described.

When moving the seat base 11 with respect to the floor surface F, a signal that extends and retracts the first slide rod 22 with respect to the first actuator body 21 in the axis direction is input to the first actuator body 21 from a control apparatus, which is not illustrated, by an operation on a switch or the like by the passenger. As an example, when the seat base 11 is moved forward, as illustrated in FIG. 5, the first actuator body 21 is controlled so as to retract the first slide rod 22 with respect to the first actuator body 21 in the axis direction.

The first actuator body 21 is attached via a bracket fixed inside the floor surface F, and the seat base 11 is slidably attached to the floor surface F via the first linear guiding devices 3. Therefore, the seat base 11 can be moved forward in connection with the movement of the first slide rod 22 in the axis direction.

Furthermore, when the seat base 11 is moved rearward with respect to the floor surface F, the first actuator body 21 is controlled so as to extend the first slide rod 22 with respect to the first actuator body 21 in the axis direction.

Next, the movement of the seat cushion SC by the second sliding mechanism 13 will be described.

When the seat cushion SC is moved with respect to the seat base 11, a signal that extends and retracts the second slide rod 42 with respect to the second actuator body 41 in the axis direction is input to the second actuator body 41 from the control apparatus, which is not illustrated, by an operation on the switch or the like by the passenger. As an example, when the seat cushion SC is moved forward, as illustrated in FIG. 6, the second actuator body 41 is controlled so as to extend the second slide rod 42 with respect to the second actuator body 41 in the axis direction.

The second actuator body 41 is attached via the bracket 61 fixed to the seat cushion SC, and the seat cushion SC is slidably attached to the seat base 11 via the second linear guiding devices 5. Therefore, it can be moved forward in connection with the movement of the second slide rod 42 in the axis direction.

Furthermore, when the seat cushion SC is moved rearward with respect to the seat base 11, the second actuator body 41 is controlled so as to retract the second slide rod 42 with respect to the second actuator body 41 in the axis direction.

In this manner, with the seat sliding structure 1 according to the present embodiment, as illustrated in FIG. 7, the seat S can be moved with respect to the floor surface F in the front-rear direction within the range of a distance D1 by the first sliding mechanism 12 and the second sliding mechanism 13, and the slide amount can be increased than that in conventional seat sliding structures configured with one slide rail mechanism.

In addition, the seat sliding structure 1 according to the present embodiment is different from the structures in which rails, mounting brackets, and the like are fixed to the floor surface F as in conventional seat sliding structures, and has the structure in which the first blocks 32 are fixed to the floor surface F, and the first rails 31 are integrally moved with the seat base 11. Therefore, as illustrated in FIG. 7, even when the seat S is moved forward, the first rails 31 are not exposed in a range R1 behind the seat S. In addition, similarly, also in front of the seat S, the first rails 31 are not exposed.

In addition, since the second rails 51 of the second linear guiding devices 5 are also arranged inside the seat cushion SC, even when the seat cushion SC is moved with respect to the seat base 11 in the front-rear direction, the second rails 51 are not exposed.

As described above, with the seat sliding structure 1 according to the present embodiment, a wide space without obstacles at the feet can be secured in front of and behind the seat S.

### [Second Embodiment]

In the first embodiment described above, the description has been given of the seat sliding structure 1 in which the first actuator 2 is arranged inside the floor surface F, and the second actuator 4 is arranged inside the seat cushion SC. A seat sliding structure in a mode different from that of the first embodiment will be described as a seat sliding structure 1' according to a second embodiment, which will be described next. It should be noted that members that are the same as or similar to those in the above-described first embodiment are denoted by the same numerals, and detailed description will be omitted.

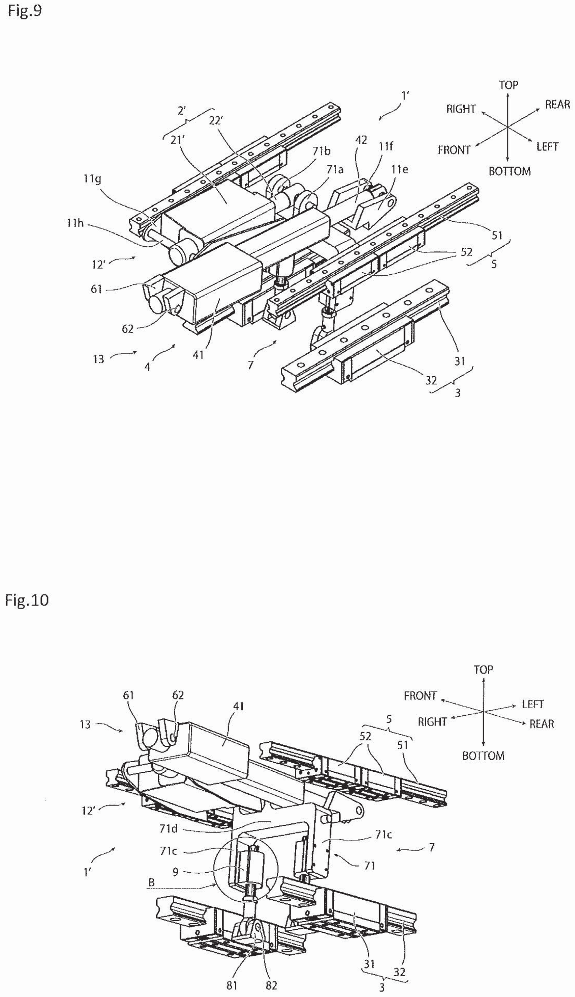

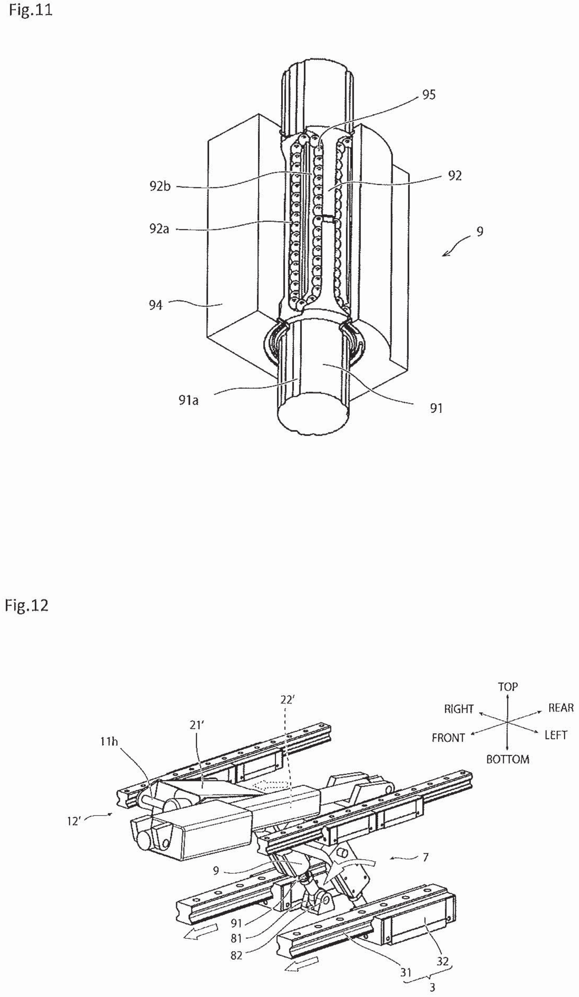

FIG. 8 is a side view of a seat sliding structure according to the second embodiment of the present invention, FIG. 9 is a perspective view of the seat sliding structure according to the second embodiment of the present invention as seen from above, FIG. 10 is a perspective view of the seat sliding structure according to the second embodiment of the present invention as seen from below, and FIG. 11 is an enlarged cross-sectional view of a part B in FIG. 10.

As illustrated in FIG. 8, the seat sliding structure 1' according to the second embodiment is arranged inside the seat S, and attaches the seat S to the floor surface F so as to be slidable in the front-rear direction. In the present embodiment, the seat S includes the seat cushion SC and the seat back SB, and is used as a front seat of an automobile as an example.

The seat sliding structure 1' includes a seat base that is arranged between the floor surface F and the seat cushion SC, and that is not illustrated. In addition, the seat sliding structure 1' includes a first sliding mechanism 12' that attaches the seat base to the floor surface F to be slidable in the front-rear direction, and a second sliding mechanism 13 that attaches the seat cushion SC to the seat base to be slidable in the front-rear direction.

As illustrated in FIG. 9, the seat base includes, on a top front side, a bracket part 11g to which a first actuator body 21', which will be described later, is rotatably attached. The bracket part 11g includes a hinge pin 11h having the depth direction (hereinafter referred to as the left-right direction) as viewed in FIG. 8 as the axis direction.

In addition, the seat base includes a rail mounting portion to which the first rails 31 are fixed, and a block mounting portion to which the second blocks 52 are fixed. The rail mounting portion to which the first rails 31 are fixed is arranged below the seat base, and the block mounting portion to which the second blocks 52 are fixed is arranged to be in an upper portion of the seat base and to be inside the seat cushion SC.

In addition, the seat base includes the second bracket part 11e to which the second slide rod 42 is rotatably attached. As illustrated in FIG. 8, the second bracket part 11e is arranged inside the seat cushion SC, and includes the hinge pin 11f having the left-right direction as the axis direction.

The first sliding mechanism 12' includes a first actuator 2', a link mechanism 7 that converts the operation of the first actuator 2' and drives the seat base with respect to the floor surface F in the front-rear direction, and the pair of first linear guiding devices 3 that guide the movement of the seat base in the front-rear direction.

The first actuator 2' includes a first slide rod 22' that is a shaft portion, and a first actuator body 21' that linearly moves the first slide rod 22' in the axis direction. In the present embodiment, the first actuator body 21' and the first slide rod 22' can have the same configurations as the first actuator body 21 and the first slide rod 22 in the above-described first embodiment. In addition, similar to the first actuator 2, the first actuator 2' is supplied with power from the power storage device that is not illustrated, and can extend and retract the first slide rod 22' in the axis direction with respect to the first actuator body 21' in response to an operation on a switch or the like by the passenger. It should be noted that as illustrated in FIG. 9, the first actuator body 21' is arranged substantially parallel to the second actuator body 41 above the seat base.

As illustrated in FIG. 8, the first actuator 2' is arranged inside the seat cushion SC, and is arranged so that the axis direction of the first slide rod 22' is substantially the front-rear direction. In addition, as illustrated in FIG. 9, a front-side end portion of the first actuator body 21' is attached via the bracket part 11g of the seat base, and is attached to be rotatable around the hinge pin 11h.

As illustrated in FIG. 9, a rear-side end portion of the first slide rod 22' is attached via a first bracket part 71a of a link member 71, which will be described later, and is attached to the link member 71 so as to be rotatable around a hinge pin 71b, which will be described later.

As illustrated in FIG. 10, the link mechanism 7 includes the link member 71, a pair of brackets 81 fixed to the floor surface F, and a pair of ball splines 9 that connect the link member 71 and the brackets 81.

As illustrated in FIG. 10, the link member 71 is a substantially U-shaped member, includes a pair of leg portions 71c, and is arranged between the seat cushion SC and the floor surface F so that the leg portions 71c face the floor surface F side. In addition, the link member 71 includes a center portion 71d that couples the pair of leg portions 71c, and the center portion 71d includes the first bracket part 71a to which the first slide rod 22' is rotatably attached as illustrated in FIG. 9. In addition, the first bracket part 71a includes the hinge pin 71b having the left-right direction as the axis direction.

As illustrated in FIG. 10, the ball splines 9 are attached to opposing surfaces of the pair of leg portions 71c.

As illustrated in FIG. 11, the ball spline 9 includes a spline shaft 91 as a shaft member on which ball rolling grooves 91a are formed along the longitudinal direction, and a fixing member 94 that is fixed to the leg portion 71c, and that guides the spline shaft 91 so as to be movable in the axis direction.

The fixing member 94 includes a spline nut 92 on which load rolling grooves 92a corresponding to the ball rolling grooves 91a are formed.

The spline nut 92 is attached to the spline shaft 91 via a plurality of balls 95 that roll between the ball rolling grooves 91a and the load rolling grooves 92a. In addition, no-load rolling paths 92b are formed on the spline nut 92 along the longitudinal direction. The both end portions of the no-load rolling path 92b communicate with the load rolling grooves 92a, thereby allowing the balls 95 to infinitely circulate in the spline nut 92.

A lower end portion of the spline shaft 91 is attached to the floor surface F via the bracket 81 as illustrated in FIG. 10. The bracket 81 includes a hinge pin 82 having the left-right direction as the axis direction, and the spline shaft 91 is attached to be rotatable around the hinge pin 82.

It should be noted that in the present embodiment, although the link member 71 has been described as being the substantially U-shaped member, the shape of the link member 71 is not limited to this, and may be appropriately set in accordance with an attachment space or the like. In addition, the attachment positions and quantity of the ball splines 9 may also be appropriately set in accordance with the shape of the link member 71.

Next, an operation example of the seat sliding structure 1' according to the present embodiment will be described.

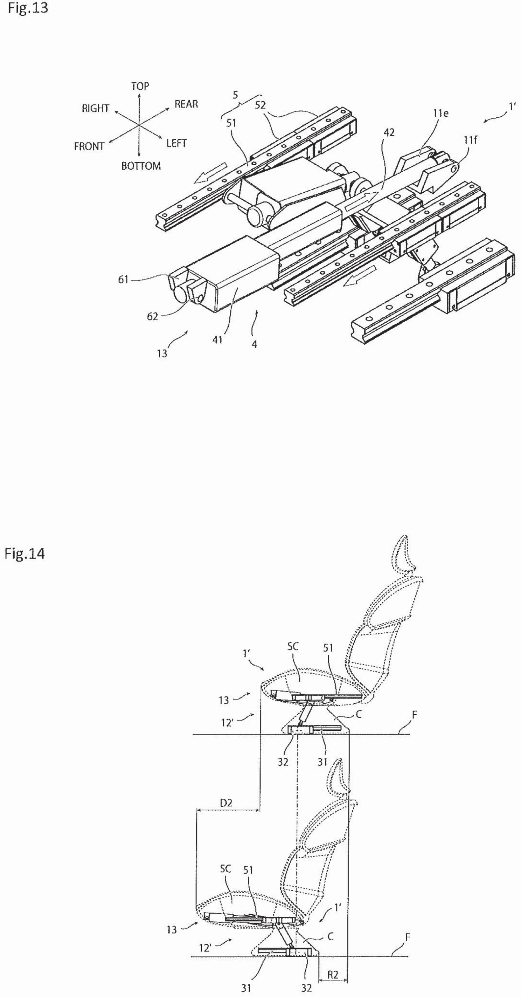

FIG. 12 is a perspective view of the seat sliding structure according to the second embodiment of the present invention as seen from above, illustrating a state where the first sliding mechanism is driven forward, FIG. 13 is a perspective view of the seat sliding structure according to the second embodiment of the present invention as seen from above, illustrating a state where the first sliding mechanism and the second sliding mechanism are driven forward, and FIG. 14 is a reference diagram illustrating a moving range of a seat according to the second embodiment of the present invention, in which an upper portion illustrates a state where the seat is moved to a rearmost position, and a lower portion illustrates a state where the seat is moved to a foremost position.

In the seat sliding structure 1' according to the present embodiment, each of the first sliding mechanism 12' and the second sliding mechanism 13 can be independently driven, and each of the movement of the seat base with respect to the floor surface F in the front-rear direction and the movement of the seat cushion SC with respect to the seat base in the front-rear direction can be performed.

First, the movement of the seat base by the first sliding mechanism 12' will be described.

When moving the seat base with respect to the floor surface F, a signal that extends and retracts the first slide rod 22' with respect to the first actuator body 21' in the axis direction is input to the first actuator body 21' from a control apparatus, which is not illustrated, by an operation on a switch or the like by the passenger. As an example, when the seat base is moved forward, the first actuator body 21' is controlled so as to retract the first slide rod 22' with respect to the first actuator body 21' in the axis direction.

Since a rear-side end portion of the first slide rod 22' is rotatably attached to the first bracket part 71a of the link member 71, as illustrated in FIG. 12, the link mechanism 7 is rotated so as to be inclined forward around the hinge pin 82 in connection with the movement of the first slide rod 22'. In addition, the bracket 81 including the hinge pin 82 is fixed to the floor surface F, and the seat base is slidably attached to the floor surface F via the first linear guiding devices 3. Therefore, the seat base can move forward integrally with the first actuator body 21' with the inclination of the link mechanism 7.

Furthermore, when the seat base is moved rearward, the first actuator body 21' is controlled so as to extend the first slide rod 22' with respect to the first actuator body 21' in the axis direction. At this time, the link mechanism 7 can be rotated so as to be inclined rearward around the hinge pin 82, and the seat base can move rearward with the rearward inclination of the link mechanism 7.

In addition, the first actuator body 21' is rotatably attached to the seat base by the hinge pin 11h, and the link member 71 is attached to be slidable along the spline shafts 91 by the ball splines 9. Therefore, the first sliding mechanism 12' can smoothly perform a series of operations for causing the link mechanism 7 to be inclined to move the seat base, without interference between each part.

Next, the movement of the seat cushion SC by the second sliding mechanism 13 will be described.

When moving the seat cushion SC with respect to the seat base, a signal that extends and retracts the second slide rod 42 with respect to the second actuator body 41 in the axis direction is input to the second actuator body 41 from the control apparatus, which is not illustrated, by an operation on the switch or the like by the passenger. As an example, when the seat cushion SC is moved forward, as illustrated in FIG. 13, the second actuator body 41 is controlled so as to extend the second slide rod 42 with respect to the second actuator body 41 in the axis direction.

The second actuator body 41 is attached via the bracket 61 fixed to the seat cushion SC, and the seat cushion SC is slidably attached to the seat base via the second linear guiding devices 5. Therefore, it can be moved forward in connection with the movement of the second slide rod 42 in the axis direction.

Furthermore, when the seat cushion SC is moved rearward with respect to the seat base, the second actuator body 41 is controlled so as to retract the second slide rod 42 with respect to the second actuator body 41 in the axis direction.

In this manner, with the seat sliding structure 1' according to the present embodiment, as illustrated in FIG. 14, the seat S can be moved with respect to the floor surface F in the front-rear direction within a range of a distance D2 by the first sliding mechanism 12' and the second sliding mechanism 13, the slide amount can be increased than that in conventional seat sliding structures configured with one slide rail mechanism.

In addition, the seat sliding structure 1' according to the present embodiment is different from the structures in which rails and mounting brackets are fixed to the floor surface F as in conventional seat sliding structures, and has the structure in which the first blocks 32 are fixed to the floor surface F, and the first rails 31 are integrally moved with the seat base. Therefore, as illustrated in FIG. 14, even when the seat S is moved forward, the first rails 31 are not exposed in a range R2. In addition, similarly, also in front of the seat S, the first rails 31 are not exposed.

In addition, since the second rails 51 of the second linear guiding devices 5 are also arranged inside the seat cushion SC, even when the seat cushion SC is moved with respect to the seat base in the front-rear direction, the second rails 51 are not exposed.

As described above, with the seat sliding structure 1' according to the present embodiment, a wide space without obstacles at the feet can be secured in front of and behind the seat S.

In addition, in the seat sliding structure 1' according to the present embodiment, since the first actuator 2' is arranged inside the seat cushion SC, the internal space on the floor surface F under the seat S can be effectively utilized. Therefore, in electric cars in which a battery is installed in an internal space on the floor surface F, the battery capacity can be increased, and the cruising range can be increased.

It should be noted that, although the seat sliding structures 1 and 1' according to the present embodiments have been described for the case where they are mounted on the seat S used as a front seat of an automobile, the seat S on which the seat sliding structures 1 or 1' is mounted is not limited to this, and may be a rear seat in a second or subsequent row in an automobile. In addition, the seat S is not limited to a seat for automobile, and may be a seat for various kinds of vehicles, such as trains, marine vessels, or airplanes. It is clear from the language of the claims that modes with such changes or improvements may also be included in the technical scope of the present invention.

### REFERENCE SIGNS LIST

1 seat sliding structure, 2 first actuator, 3 first linear guiding device, 5 second linear guiding device, 7 link mechanism, 11 seat base, 31 first rail, 32 first block, 51 second rail, 52 second block, S seat, F floor surface.

## Claims

1. A seat sliding structure in which a seat is attached to a floor surface so as to be slidable in a front-rear direction, the seat sliding structure comprising:
a first linear guiding device that guides the seat to be slidable in the front-rear direction,
wherein the first linear guiding device includes a first rail and a first block, and
the first block is fixed to the floor surface.

2. The seat sliding structure according to claim 1, comprising:
a seat base arranged between the seat and the floor surface,
wherein the first rail is fixed to the seat base, and
the seat sliding structure comprises a second linear guiding device that guides the seat to be slidable in a front-rear direction with respect to the seat base.

3. The seat sliding structure according to claim 2,
wherein the second linear guiding device includes a second rail and a second block,
the second block is fixed to the seat base, and
the second rail is fixed to the seat.

4. The seat sliding structure according to claim 3, comprising:
a first actuator that moves the seat base in the front-rear direction with respect to the floor surface,
wherein the first actuator is arranged inside the floor surface.

5. The seat sliding structure according to claim 3, comprising:
a first actuator that moves the seat base in the front-rear direction with respect to the floor surface; and
a link mechanism between the first actuator and the floor surface,
wherein the first actuator is attached to the seat base.

6. The seat sliding structure according to claim 5,
wherein the first actuator and a second actuator that moves the seat in the front-rear direction with respect to the seat base are each arranged above the seat base.

7. The seat sliding structure according to claim 3,
wherein the first rail is shorter than the second rail in the front-rear direction.

8. The seat sliding structure according to claim 2,
wherein the seat base is formed into a shape that is widened from a bottom surface of the seat toward the floor surface in a cross section in the front-rear direction.

9. A seat sliding structure in which a seat is attached to a floor surface so as to be slidable in a front-rear direction, the seat sliding structure comprising:
a second linear guiding device that guides the seat to be slidable in the front-rear direction,
wherein the second linear guiding device includes a second rail and a second block, and
the second rail is fixed to the seat.
